# EUROPÄISCHE PATENTSCHRIFT

(11) **EP 3 019 363 B1**
(45) Veröffentlichungstag und Bekanntmachung des Hinweises auf die Patenterteilung: **21.06.2017**
(21) Anmeldenummer: 14736771.8
(22) Anmeldetag: 04.07.2014
(51) Int. Cl.: B60H 1/22, B60H 1/00, B60H 1/32

(54) **SYSTEM ZUR STEUERUNG EINER HEIZ-KLIMAANLAGE IN EINEM KRAFTFAHRZEUG**
METHOD FOR CONTROLLING A HEATING AND AIR CONDITIONING SYSTEM IN A VEHICLE
SYSTÈME DE COMMANDE D'UNE INSTALLATION DE CHAUFFAGE-CLIMATISATION DANS UN VÉHICULE AUTOMOBILE

(30) Priorität: 08.07.2013 DE 102013213347
(43) Veröffentlichungstag der Anmeldung: 18.05.2016
(73) Patentinhaber: Bayerische Motoren Werke Aktiengesellschaft, 80809 München (DE)
(72) Erfinder: HORN, Oliver, 81475 München (DE); HERBOLZHEIMER, Robert, 82194 Gröbenzell (DE)
(86) Internationale Anmeldenummer: PCT/EP2014/064345
(87) Internationale Veröffentlichungsnummer: WO 2015/004023

(56) Entgegenhaltungen:
- EP-A2- 1 375 211
- DE-A1-102010 026 354
- US-A1- 2006 005 552
- US-A1- 2006 086 113

## Beschreibung

Die Erfindung bezieht sich auf ein System zur Steuerung einer Heiz-Klimaanläge mit einem als Wärmepumpensystem betreibbaren Kältemittelkreislauf mit einem Umgebungswärmetauscher nach dem Oberbegriff des Anspruchs 1.

Grundsätzlich ist bereits bekannt, dass bei Heiz-Klimaanlagen mit einem Wärmepumpensystem im Kühlbetrieb Wärme vom Kältemittel an die den Umgebungswärmetauscher durchströmende Luft abgegeben, und im Heizbetrieb mit einer geeigneten Kältekreislaufverschaltung Wärme am Verdampfer im Klimagerät und am Umgebungswärmetauscher aufgenommen und zum Heizen verwendet wird. Ein derartige Heizklimaanlage mit einem Wärmepumpensystem ist bspw. aus der DE 102 53 357 B4 bekannt

Weiter ist bekannt, dass in konventionellen Fahrzeugklimaanlagen in der herkömmlichen (Kühl-)Betriebsart des Kältekreislaüfs ein elektrischer Lüfter zur Dosierung der Luftmenge, die den Kondensator durchströmt, vorgesehen ist. Dieser elektrische Lüfter wird im Kühlbetrieb in Abhängigkeit des Kältemitteldrucks gesteuert, damit die Wärmeabgabe vom Kältemittel an die den Kondensator durchströmende Luft gezielt erfolgen kann. Dabei wird der elektrische Lüfter derart angesteuert, dass bei höherem Kältemitteldruck die Drehzahl des elektrischen Lüfters erhöht wird.

Die DE 10 2010 026 354 A1 offenbart ein System zur Steuerung einer Heiz-Klimaanlage mit einem als Wärmepumpensystem betreibbaren Kältemittelkreislauf mit einem Umgebungswärmetauscher, wobei die den Umgebungswärmetauscher durchströmende Luftmenge mittels eines elektrischen Lüfters, der stets in Abhängigkeit des Kältemittelhochdrucks angesteuert wird, beeinflusst wird.

Aufgabe der Erfindung ist nun, eine Betriebsstrategie für den elektrischen Lüfter zur Dosierung der Luftmenge der über den Kondensator bzw. Umgebungswärmetauscher strömenden Luft einer Heiz-Klimaanlage mit einem als Wärmepumpensystem betreibbaren Kältemittelkreislauf anzugeben, welche sowohl an den Kühlbetrieb als auch an den Heizbetrieb optimal angepasst ist.

Diese Aufgabe wird durch ein System nach Patentanspruch 1 gelöst. Vorteilhafte Weiterbildungen ergeben sich aus den abhängigen Ansprüchen. Das erfindungsgemäße System bzw. die entsprechende Steuerlogik, sowie dessen vorteilhafte Ausgestaltungen können mittels eines implementierten Algorithmus oder einer entsprechenden Baugruppenanordnung in zumindest einer dafür vorgesehenen Steuervorrichtung, insbesondere in einer Heiz-Klima-Steuervorrichtung umgesetzt werden.

Die Erfindung basiert auf dem Grundgedanken, dass die bei konventionellen Fahrzeugklimaanlagen in der herkömmlichen Betriebsart des Kältemittelkreislaufs bekannte Lüfteransteuerung lediglich im Kühlbetrieb eine geeignete Ansteuerstrategie darstellt, da im Heizbetrieb, in dem der als Verdampfer verwendete Kondensator bzw. Umgebungswärmetauscher im Wärmepumpenbetrieb verwendet wird, der Kältemitteldruck kein Maß für die erforderliche Luftmenge über den Umgebungswärmetauscher darstellt, d. h. die bisherige Steuerung des elektrischen Lüfters in Abhängigkeit vom Kältemitteldruck ist für den Heizbetrieb ungeeignet.

Grundgedanke der Erfindung ist, den elektrischen Lüfter funktionell, energetisch und akustisch möglichst sinnvoll anzusteuern, insbesondere derart, dass die Lüfterdrehzahl unter Berücksichtigung der erforderlichen Luftmenge um den Umgebungswärmetauscher aus akustischen und energetischen Gründen so gering wie möglich einstellt wird.

Aufgrund der Erkenntnis, dass im Heizbetrieb des Wärmepumpensystems der Kältemitteldruck kein geeignetes Maß für die erforderliche Luftmenge am Umgebungswärmetauscher darstellt, ist das System zur Steuerung einer Heiz-Klimaanlage mit einem als Wärmepumpensystem betreibbaren Kältemittelkreislauf mit einem Umgebungswärmetauscher, an dem im Kühlbetrieb Wärme vom Kältemittel an die den Umgebungswärmetauscher durchströmende Luft abgegeben und im Heizbetrieb Wärme von der den Umgebungswärmetauscher durchströmenden Luft vom Kältemittel aufgenommen wird, erfindungsgemäß derart ausgestaltet, dass der elektrische Lüfter, durch den die den Umgebungswärmetauscher durchströmende Luftmenge beeinflusst wird, im Kühlbetrieb in Abhängigkeit des Kältemitteldrucks, und im Heizbetrieb in Abhängigkeit eines vom Kältemittelhochdruck unabhängigen Parameters gesteuert wird.

Da im Heizbetrieb die aktuell umgesetzte bzw. umzusetzende Heizleistung einen relevanten Einflussfaktor auf die den Umgebungswärmetauscher durchströmende notwendige Luftmenge darstellt, wird der elektrische Lüfter im Heizbetrieb vorteilhafterweise in Abhängigkeit einer aktuell umgesetzten/ umzusetzenden Heizleistung angesteuert. Da die umgesetzte bzw. umzusetzende Heizleistung wiederum von der angeforderten Heizleistung und der Außentemperatur abhängt, kann der elektrische Lüfter im Heizbetrieb direkt in Abhängigkeit dieser beiden leicht zu ermittelnden Parameter gesteuert werden, d. h. der elektrische Lüfter wird vorteilhafterweise im Heizbetrieb in Abhängigkeit von der angeforderten Heizleistung und/oder der Außentemperatur und/oder der Temperatur der den Umgebungswärmetauscher durchströmenden Luft angesteuert.

Konkret kann die Ansteuerung des elektrischen Lüfters in Abhängigkeit dieser oben genannten Parameter derart erfolgen, dass in Abhängigkeit von der angeforderten Heizleistung ein Ansteuerwert bzw. eine Basis-Drehzahl ermittelt wird, welche anschließend in Abhängigkeit von der Außentemperatur über einen Faktor angehoben oder abgesenkt wird. Hintergrund hierfür ist, dass bei Temperaturen um 0° C eine besonders hohe Vereisungsgefahr des Umgebungswärmetauschers besteht, und diese mit einer Anhebung der Drehzahl des elektrischen Lüfters und damit der Luftmenge verringert werden kann. Der Zusammenhang zwischen angeforderter Heizleistung und Lüfteranforderung bzw. notwendiger Luftmenge ist dabei derart festgelegt, dass der Lüfter bei geringer angeforderter Heizleistung mit einer niedrigeren Drehzahl angesteuert wird (und demnach eine geringere Luftmenge fördert), als bei einer höher angeforderten Heizleistung.

Zusätzlich oder alternativ kann bei der Ermittlung einer geeigneten Ansteuerung des elektrischen Lüfters im Heizbetrieb auch die Geschwindigkeit des Fahrzeugs berücksichtigt werden, d. h. der elektrische Lüfter kann im Heizbetrieb auch in Abhängigkeit von der aktuellen Fahrzeuggeschwindigkeit angesteuert werden. Insbesondere kann der elektrische Lüfter im Heizbetrieb in Abhängigkeit von der Geschwindigkeit derart angesteuert werden bzw. die Ansteuerung derart beeinflusst werden, dass eine aufgrund der angeforderten Heizleistung ermittelte Lüfteranforderung (Drehzahl) des elektrischen Lüfters in Abhängigkeit von der Geschwindigkeit des Fahrzeugs angehoben oder reduziert wird. Mit anderen Worten kann über einen (weiteren) Faktor abhängig von der Fahrzeuggeschwindigkeit die Lüfteranforderung bspw. abgesenkt werden, da bei hohen Geschwindigkeiten - z. B. über 40 km/h - der Fahrwind ausreicht, um eine ausreichende Luftmenge über den Umgebungswärmetauscher darzustellen.

Ebenso kann zusätzlich oder alternativ bei der Ermittlung einer geeigneten Ansteuerung des elektrischen Lüfters im Heizbetrieb auch die Feuchte der Außenluft und/oder ein ermittelter Taupunkt der Außenluft und/oder die Kältemitteltemperatur im Umgebungswärmetauscher, welcher sinnvoll nach Umgebungswärmetauscher gemessen wird, berücksichtigt werden. Vorteilhafterweise kann der elektrische Lüfter insbesondere in Abhängigkeit von der Differenz des ermittelten Taupunkts und der Kältemitteltemperatur nach dem Umgebungswärmetauscher gesteuert bzw. eine ermittelte Steuergröße beeinflusst werden.

Vorteilhafterweise kann schließlich auch vorgesehen sein, dass der elektrische Lüfter im Heizbetrieb unabhängig von dem zumindest einem auszuwertenden Parameter grundsätzlich mit einer Mindestlüfteranforderung bzw. Mindestdrehzahl (z. B. 30%) angesteuert wird.

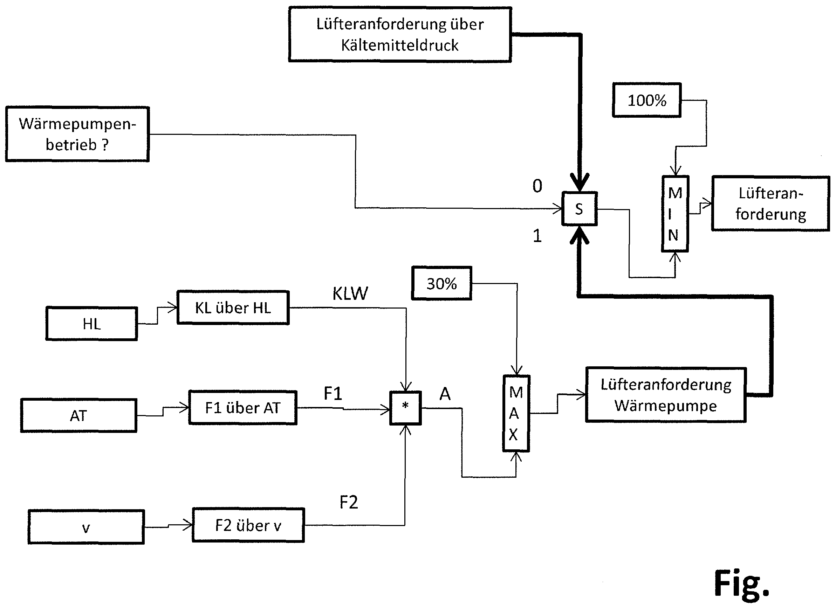

Das erfindungsgemäße Verfahren wird nun anhand eines Ausführungsbeispiels näher erläutert. Dabei zeigt die einzige Fig. eine vereinfachte Steuerlogik für einen elektrischen Lüfter zur Dosierung der über einen Umgebungswärmetauscher strömenden Luftmenge eines als Wärmepumpensystems ausgebildeten Kältekreislaufs einer Heiz-Klimaanlage in einem Kraftfahrzeug.

Im Detail zeigt die Steuerlogik, dass bei der Ansteuerung bzw. der Art der Ansteuerung des elektrischen Lüfters grundsätzlich unterschieden wird, ob sich der Kältemittelkreislauf im Wärmpumpenbetrieb befindet oder nicht. Befindet sich der Kältemittelkreislauf nicht im Wärmepumpenbetrieb, d. h. die Klimaanlage befindet sich im Kühlbetrieb, wird ein zentral angeordneter Schalter S in die Stellung "0" gebracht, so dass der elektrische Lüfter in Abhängigkeit des Kältemitteldrucks angesteuert wird, d. h. es findet eine "klassische" Lüftersteuerung über den Kältemitteldruck statt.

Befindet sich die Heiz-Klimaanlage jedoch nicht im Kühlbetrieb bzw. sog. A/C-Betrieb, sondern im Wärmepumpenbetrieb bzw. Heizbetrieb, bei dem Wärme am Verdampfer im Klimagerät und am Umgebungswärmetauscher aufgenommen und zum Heizen verwendet wird, wird der zentral angeordneter Schalter S in die Stellung "1" gebracht, so dass der elektrische Lüfter nicht in Abhängigkeit vom Kältemitteldruck, sondern in Abhängigkeit mehrerer - vom Kältemitteldruck unabhängiger - Parameter angesteuert wird bzw. die Lüfteranforderung in Anhängigkeit dieser vom Kältemitteldruck unabhängigen Parameter ermittelt wird.

Die Ermittlung der Lüfteranforderung des elektrischen Lüfters im Heizbetrieb wird nun im Folgenden genauer erläutert: Grundsätzlich werden in diesem Beispiel hierzu die angeforderte Heizleistung HL, die Außentemperatur AT und die Fahrzeuggeschwindigkeit v berücksichtigt.

Zunächst wird in Abhängigkeit von der angeforderten Heizleistung HL ein Kennlinien-Wert KLW für die Lüfteransteuerung ermittelt, wobei der Zusammenhang aus angeforderter Heizleistung HL und Kennlinien-Wert KLW für die Lüftersteuerung über eine in der Steuerlogik abgelegte Kennlinie KL festgelegt ist.

Gleichzeitig wird in Abhängigkeit von der Außentemperatur ein erster Faktor F1, und in Abhängigkeit von der Fahrzeuggeschwindigkeit v ein zweiter Faktor F2 ermittelt. Der oben genannte von der angeforderten Heizleistung abhängige Kennlinien-Wert KLW (z. B. Drehzahl des Lüfters) wird anschließend mit den ermittelten ersten und zweiten Faktoren F1 und F2 multipliziert, wodurch der Kennlinien-Wert KLW entweder angehoben, oder reduziert wird. Ist bspw. die Geschwindigkeit des Fahrzeugs größer als 40 km/h, kann der zweite Faktor F2 keiner als 1 sein und den Kennlinien-Wert KLW derart beeinflussen, dass dieser reduziert wird, da aufgrund der Fahrzeuggeschwindigkeit bereits eine ausreichende Luftmenge durch den Umgebungswärmetauscher strömt. Ist bspw. die Außentemperatur kleiner oder ungefähr 0°C, kann zur Vermeidung einer Vereisung des Umgebungswärmetauschers der erste Faktor F1 mit einem Wert größer 1 belegt werden und den Kennlinien-Wert KLW somit derart beeinflussen, dass dieser angehoben wird.

Nach der Multiplikation des Kennlinien-Wertes KLW mit dem ersten und zweiten Faktor F1 und F2 wird der sich dadurch ergebende korrigierte Anforderungswert A in einer Einheit MAX mit einer festgelegten, unteren Mindestansteuerungsanforderung - in diesem Beispiel 30% - verglichen und das Maximum dieser beiden Anforderungswerte ausgegeben und als letztendlich gültige Lüfteranforderung an die Ansteuereinheit des elektrischen Lüfters übergegeben. Da in dem Beispiel der Ansteuerwert prozentual angegeben wird, kann dieser noch auf den maximal sinnvollen Wert von 100% begrenzt werden.

Somit kann durch das hier dargestellte System, insbesondere durch die entsprechende Ansteuerlogik für den elektrischen Lüfter eine bedarfsgerechte, akustisch verträgliche energieeffiziente Lüfteransteuerung einer entsprechend ausgebildeten Heiz-Klimaanlage mit einem als Wärmepumpensystem betreibbaren Kältemittelkreislauf sowohl im Kühlbetrieb als auch im Heizbetrieb erreicht werden.

## Patentansprüche

1. System zur Steuerung einer Heiz-Klimaanlage mit einem als Wärmepumpensystem betreibbaren Kältemittelkreislauf mit einem Umgebungswärmetauscher, an dem im Kühlbetrieb Wärme vom Kältemittel an die den Umgebungswärmetauscher durchströmende Luft abgegeben, und im Heizbetrieb Wärme von der den Umgebungswärmetauscher durchströmenden Luft vom Kältemittel aufgenommen wird, wobei die den Umgebungswärmetauscher durchströmende Luftmenge mittels eines elektrischen Lüfters beeinflusst wird, **dadurch gekennzeichnet, dass** der elektrische Lüfter im Kühlbetrieb (0) in Abhängigkeit des Kältemittelhochdrucks und im Heizbetrieb (1) nicht im Abhängigkeit vom Kältemitteldruck, sondern in Abhängigkeit eines vom Kältemittelhochdruck unabhängigen Parameters (HL, AT, v) angesteuert wird.

2. System nach Anspruch 1, **dadurch gekennzeichnet, dass** der elektrische Lüfter im Heizbetrieb (1) in Abhängigkeit einer aktuell umgesetzten Heizleistung angesteuert wird.

3. System nach Anspruch 1 oder 2, **dadurch gekennzeichnet, dass** der elektrische Lüfter im Heizbetrieb (1) in Abhängigkeit von einer angeforderten Heizleistung (HL) und/oder der Temperatur der den Umgebungswärmetauscher durchströmenden Luft und/oder in Abhängigkeit von der aktuellen Außentemperatur (AT) angesteuert wird.

4. System nach Anspruch 3, **dadurch gekennzeichnet, dass** der elektrische Lüfter im Heizbetrieb (1) derart angesteuert wird, dass der Lüfter bei geringer angeforderter Heizleistung mit einer niedrigeren Drehzahl angesteuert wird, als bei einer höher angeforderten Heizleistung.

5. System nach Anspruch 3 oder 4, **dadurch gekennzeichnet, dass** der elektrische Lüfter im Heizbetrieb (1) derart angesteuert wird, dass eine aufgrund der angeforderten Heizleistung (HL) ermittelte Lüfteranforderung (KLW) des elektrischen Lüfters in Abhängigkeit von der Außentemperatur (AT) angehoben oder reduziert wird.

6. System nach einem der vorangegangenen Ansprüche, **dadurch gekennzeichnet, dass** der elektrische Lüfter im Heizbetrieb (1) in Abhängigkeit von der aktuellen Fahrzeuggeschwindigkeit (v) angesteuert wird.

7. System nach Anspruch 6, **dadurch gekennzeichnet, dass** der elektrische Lüfter im Heizbetrieb (1) derart angesteuert wird, dass eine aufgrund der angeforderten Heizleistung (HL) ermittelte Lüfteranforderung (KLW) des elektrischen Lüfters in Abhängigkeit von der Geschwindigkeit (v) des Fahrzeugs angehoben oder reduziert wird.

8. System nach einem der vorangegangenen Ansprüche, **dadurch gekennzeichnet, dass** der elektrische Lüfter im Heizbetrieb (1) in Abhängigkeit von der Außenluftfeuchte und/oder einem ermittelten Taupunkt der Außenluft und/oder der Kältemitteltemperatur im oder nach dem Umgebungswärmetauscher, insbesondere in Abhängigkeit von der Differenz des ermittelten Taupunkts der Außenluft und der Kältemitteltemperatur im oder nach dem Umgebungswärmetauscher angesteuert wird.

9. System nach einem der vorangegangenen Ansprüche, **dadurch gekennzeichnet, dass** der elektrische Lüfter im Heizbetrieb (1) mit einer Mindestlüfteranforderung (30%) angesteuert wird.

10. System nach einem der vorangegangenen Ansprüche, **dadurch gekennzeichnet, dass** der elektrische Lüfter mit einer Maximalanforderung angesteuert wird.

## Claims

1. A system for controlling a heating and air conditioning unit having a refrigerant circuit that can be operated as a heat pump system with an ambient heat exchanger, in which, in a cooling mode, heat is given up from the refrigerant to the air flowing through the ambient heat exchanger, and in which, in a heating mode, heat is taken on from the refrigerant by the air flowing through the ambient heat exchanger, wherein the volume of air flowing through the ambient heat exchanger is influenced by means of an electric fan, **characterised in that** the electric fan, in cooling mode (0), is actuated depending on the refrigerant high pressure, and, in heating mode (1), is not actuated depending on the refrigerant high pressure, but instead depending on a parameter (HL, AT, v) independent of the refrigerant high pressure.

2. A system according to claim 1, **characterised in that** the electric fan is actuated in the heating mode (1) depending on a currently implemented heating power.

3. A system according to claim 1 or claim 2, **characterised in that** the electric fan is actuated in the heating mode (1) depending on a requested heating power (HL) and/or the temperature of the air flowing through the ambient heat exchanger and/or depending on the current external temperature (AT).

4. A system according to claim 3, **characterised in that** the electric fan is actuated in the heating mode (1) in such a way that when a lower heating power is requested the fan is actuated with a lower rotational speed than when a higher heating power is requested.

5. A system according to claim 3 or claim 4, **characterised in that** the electric fan is actuated in the heating mode (1) in such a way that a fan request (KLW) of the electric heater, determined on the basis of the requested heating power (HL), is increased or reduced depending on the external temperature (AT).

6. A system according to any one of the preceding claims, **characterised in that** in the heating mode (1) the electric fan is actuated depending on the current vehicle speed (v).

7. A system according to claim 6, **characterised in that** in the heating mode (1) the electric fan is actuated in such a way that a fan request (KLW) of the electric fan, determined on the basis of the requested heating power (HL), is increased or reduced depending on the speed (v) of the vehicle.

8. A system according to any one of the preceding claims, **characterised in that** in the heating mode (1) the electric fan is actuated depending on the external air moisture and/or a determined dew point of the external air and/or the refrigerant temperature in or after the ambient heat exchanger, more especially depending on the difference between the determined dew point of the external air and the refrigerant temperature in or after the ambient heat exchanger.

9. A system according to any one of the preceding claims, **characterised in that** in the heating mode (1) the electric fan is actuated with a minimum fan request (30%).

10. A system according to any one of the preceding claims, **characterised in that** the electric fan is actuated with a maximum request.

## Revendications

1. Système de commande d'une installation de chauffage et de climatisation comprenant un circuit d'agent de refroidissement pouvant fonctionner en tant que système de pompe à chaleur ainsi qu'un échangeur de chaleur avec l'environnement, au niveau duquel en mode de refroidissement de la chaleur provenant de l'agent de refroidissement est transférée à l'air traversant l'échangeur de chaleur, tandis qu'en mode de chauffage de la chaleur de l'air circulant dans l'échangeur de chaleur est absorbée par l'agent de refroidissement, la quantité d'air circulant dans l'échangeur de chaleur pouvant être modifiée au moyen d'un ventilateur électrique,
**caractérisé en ce qu'**
en mode de refroidissement (0) le ventilateur électrique est commandé en fonction de la haute pression de l'agent de refroidissement et en mode de chauffage (1) le ventilateur électrique n'est pas commandé en fonction de la pression de l'agent de refroidissement mais en fonction d'un paramètre (HL, AT, v) indépendant de la haute pression de l'agent de refroidissement.

2. Système conforme à la revendication 1,
**caractérisé en ce qu'**
en mode de chauffage (1) le ventilateur électrique est commandé en fonction de la puissance de chauffage actuellement mise en oeuvre.

3. Système conforme à la revendication 1 ou 2,
**caractérisé en ce qu'**
en mode de chauffage (1), le ventilateur électrique est commandé en fonction de la puissance de chauffage (HL) demandée, et/ou de la température de l'air circulant dans l'échangeur de chaleur et/ou en fonction de la température externe actuelle (AT).

4. Système conforme à la revendication 3,
**caractérisé en ce qu'**
en mode de chauffage (1) le ventilateur électrique est commandé de sorte que, en présence d'une faible puissance de chauffage demandée, il soit commandé avec une vitesse de rotation plus faible qu'en présence d'une puissance de chauffage demandée plus élevée.

5. Système conforme à la revendication 3 ou 4,
**caractérisé en ce qu'**
en mode de chauffage (1), le ventilateur électrique est commandé de sorte que la demande de ventilation (KLW) de ce ventilateur électrique déterminée sur le fondement de la puissance de chauffage (HL) demandée soit augmentée ou réduite en fonction de la température externe (AT).

6. Système conforme à l'une des revendications précédentes,
**caractérisé en ce qu'**
en mode de chauffage (1) le ventilateur électrique est commandé en fonction de la vitesse actuelle (v) du véhicule.

7. Système conforme à la revendication 6,
**caractérisé en ce qu'**
en mode de chauffage (1), le ventilateur électrique est commandé de sorte que la demande de ventilation (KLW) du ventilateur électrique déterminée sur le fondement de la puissance de chauffage (HL) demandée soit augmentée ou réduite en fonction de la vitesse (v) du véhicule.

8. Système conforme à l'une des revendications précédentes,
**caractérisé en ce qu'**
en mode de chauffage (1) le ventilateur électrique est commandé en fonction de l'humidité de l'air ambiant et/ou du point de rosée déterminé de l'air extérieur et/ou de la température de l'agent de refroidissement dans ou en aval de l'échangeur de chaleur, en particulier en fonction de la différence entre le point de rosée de l'air extérieur déterminé et la température de l'agent de refroidissement dans ou en aval de l'échangeur de chaleur.

9. Système conforme à l'une des revendications précédentes,
**caractérisé en ce qu'**
en mode de chauffage (1), le ventilateur électrique est commandé avec une demande de ventilation minimum (30%).

10. Système conforme à l'une des revendications précédentes,
**caractérisé en ce que**
le ventilateur électrique est commandé avec une demande maximum.
